(19) **Europäisches Patentamt / European Patent Office / Office européen des brevets**

(11) **EP 4 483 429 B1**

(12) **EUROPEAN PATENT SPECIFICATION**

(45) Date of publication and mention
of the grant of the patent:
**15.04.2026  Bulletin 2026/16**

(21) Application number: **23708881.0**

(22) Date of filing: **23.02.2023**

(51) International Patent Classification (IPC):
$H01M\ 4/131$ (2010.01)   $H01M\ 4/1391$ (2010.01)
$H01M\ 4/36$ (2006.01)   $H01M\ 4/48$ (2010.01)
$H01M\ 10/052$ (2010.01)   $H01M\ 10/054$ (2010.01)
$H01M\ 4/02$ (2006.01)

(52) Cooperative Patent Classification (CPC):
**H01M 4/131; H01M 4/1391; H01M 4/366;
H01M 4/48; H01M 10/052; H01M 10/054;**
H01M 2004/021; H01M 2004/027; Y02E 60/10

(86) International application number:
**PCT/GB2023/050416**

(87) International publication number:
**WO 2023/161641 (31.08.2023 Gazette 2023/35)**

(54) **ELECTRODE AND METHOD OF MANUFACTURE**

ELEKTRODE UND VERFAHREN ZUR HERSTELLUNG

ÉLECTRODE ET SON PROCÉDÉ DE FABRICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.02.2022  GB 202202454**

(43) Date of publication of application:
**01.01.2025  Bulletin 2025/01**

(73) Proprietor: **Echion Technologies Limited
Cambridge CB22 3FG (GB)**

(72) Inventors:
• **ZHANG, Wanwei**
  **Sawston**
  **Cambridge CB22  3FG (GB)**
• **LEWIS, Joshua**
  **Sawston**
  **Cambridge CB22  3FG (GB)**
• **GROOMBRIDGE, Alexander**
  **Sawston**
  **Cambridge CB22  3FG (GB)**

(74) Representative: **Carpmaels & Ransford LLP
One Southampton Row
London WC1B 5HA (GB)**

(56) References cited:
**GB-A- 2 595 761**

• **GRIFFITH KENT J. ET AL: "High-Rate
Intercalation without Nanostructuring in
Metastable Nb 2 O 5 Bronze Phases", JOURNAL
OF THE AMERICAN CHEMICAL SOCIETY, vol.
138, no. 28, 20 July 2016 (2016-07-20), pages
8888 - 8899, XP055821073, ISSN: 0002-7863,
Retrieved from the Internet <URL:https://pubs.
acs.org/doi/pdf/10.1021/jacs.6b04345> [retrieved
on 20230510], DOI: 10.1021/jacs.6b04345**
• **YI TING-FENG ET AL: "A review of niobium
oxides based nanocomposites for lithium-ion
batteries, sodium-ion batteries and
supercapacitors", NANO ENERGY, vol. 85, 4
March 2021 (2021-03-04), NL, pages 105955,
XP093045600, ISSN: 2211-2855, DOI: 10.1016/
j.nanoen.2021.105955**

## Description

### Field of the Invention

The present invention relates to electrodes comprising niobium oxide and methods for making the same. Such electrodes are of interest for use in as metal-ion batteries, such as lithium-ion or sodium-ion batteries, preferably as anodes in lithium-ion batteries.

### Background

Lithium-ion (Li-ion) batteries are a commonly used type of rechargeable battery with a global market predicted to grow to $200bn by 2030. Li-ion batteries are the technology of choice for electric vehicles that have multiple demands across technical performance to environmental impact, providing a viable pathway for a green automotive industry.

A typical lithium-ion battery is composed of multiple cells connected in series or in parallel. Each individual cell is usually composed of an anode (negative polarity electrode) and a cathode (positive polarity electrode), separated by a porous, electrically insulating membrane (called a separator), immersed into a liquid (called an electrolyte) enabling lithium ions transport. In most systems, the electrodes are composed of an active electrode material - meaning that it is able to chemically react with lithium ions to store and release them reversibly in a controlled manner - mixed if necessary with an electrically conductive additive (such as carbon) and a polymeric binder. A slurry of these components is coated as a thin film on a current collector (typically a thin foil of copper or aluminium), thus forming the electrode upon drying.

In the traditional Li-ion battery technology, the safety limitations of graphite anodes upon battery charging are a serious impediment to its application in high-power electronics, automotive and industry. Various polymorphs of niobium oxide have previously been demonstrated as Li-ion battery materials. In 1981, Reichman and Bard (B. Reichman and A. J. Bard, "The Application of Nb2O5 as a Cathode in Nonaqueous Lithium Cells", J. Electrochem. Soc., 128, 344, 1981) firstly demonstrated the electrochemical performance of niobium oxide in lithium-ion cells as a cathode material. Later in 1983, Cava et al. (R. J. Cava, D. W. Murphy, and S. M. Zahurak, "Lithium Insertion in Wadsley-Roth Phases Based on Niobium Oxide," J. Electrochem. Soc., vol. 130, no. 12, pp. 2345-2351, 1983) studied lithium-inserted Wadsley-Roth phases in niobium oxides. In 1994, Koshiba et al. (N. Koshiba, K. Takata, M. Nakanishi, and Z. Takehara, "Evaluation of crystalline Nb2O5 as an anode of rechargeable lithium cell", Denki Kagaku, vol. 62, no. 7, pp. 593-601, 1994) studied different niobium oxide polymorphs from calcination of niobium chloride at different temperatures as anode materials for Li-ion batteries. More recently, Griffith et al. ( K. J. Griffith, A. C. Forse, J. M. Griffin, and C. P. Grey, "High-Rate Intercalation without Nanostructuring in Metastable Nb2O5 Bronze Phases," J. Am. Chem. Soc., vol. 138, no. 28, pp. 8888-8899, 2016) studied a variety of micro-sized niobium oxide polymorphs synthesised from heating $NbO_2$ as anode materials, finding that capacity and rate performance of low-temperature bronze-phase TT- and T- polymorphs are inherent properties of the bulk crystal structure. Li et al. ("A Niobium Oxide with Shear Structure and Planar Defects for High-Power Lithium Ion Batteries," Energy Environ. Sci., 2021) prepared micrometer-sized $H$-$Nb_2O_5$ with rich Wadsley planar defects by adjusting the calcination temperature for fast lithium storage. They further tested the effect of particle size on cell performance for well-crystallized $H$-$Nb_2O_5$, obtaining a smaller particle size by means of roller milling. Cell results suggested that the particle size reduction gave little improvement. In WO2021/245411 niobium oxide is mixed with an oxide of the general formula $M1_aM2_{1-a}M3_bNb_{12-b}O_{33-c-d}Q_d$. EP0402687B1 relates to a niobium oxide powder of >90% of the T-phase, having a fluorine value <1000 ppm, >99.9% by weight passes through a 45 $\mu$m sieve, with a BET surface area larger than 3.5 $m^2$/g, for application in ceramic capacitors.

In summary, although it does have some promising properties, niobium oxide is said to have intrinsically poor electronic conductivity and to suffer from capacity decay resulting from pulverisation during charge-discharge, which limits its practical application in lithium-ion batteries. Specifically, the Wadsley-Roth $H$-$Nb_2O_5$ polymorph exhibits the highest specific capacities but shows the lowest capacity retention at high charge/discharge rates due to increasing impedance (*cf*. polarisation) effects. The low-temperature bronze-type polymorphs $T$-$Nb_2O_5$ and $TT$-$Nb_2O_5$ on the other hand show higher capacity retention at high charge/discharge rates but suffer in their lower specific capacities. With more reduced forms of niobium oxide, such as $NbO_2$, a large increase in electrical conductivity can be shown as the material becomes semi-conducting, however the ability to intercalate Li-ions is lost as the material no longer bears the Wadsley-Roth or Bronze crystal structure types believed to be favourable. Typical approaches to addressing these problems rely on extensive nanoscale or particle-level engineering, increasing manufacturing complexity. Accordingly, there remains a need for more efficient methods of optimising niobium oxides for use as active electrode materials

### *Summary of the Invention*

In a first aspect, the invention provides a method of making an electrode, the method comprising: providing a starting $H$-$Nb_2O_5$ material; jet milling and classifying the starting material to provide a processed $H$-$Nb_2O_5$ material having

a $D_{50}$ particle diameter of 2.2-15 $\mu$m and a particle size distribution span $(D_{90}-D_{10})/D_{50}$ of <1.90 when $D_{10}$, $D_{50}$, and $D_{90}$ are determined by laser diffraction; and forming an electrode comprising the processed $H$-$Nb_2O_5$ material as an active electrode material.

It has been found that processing $H$-$Nb_2O_5$ using jet milling and classification to achieve the specific particle size parameters provides a surprising improvement when compared to the use of other milling methods and to other particle size parameters. For instance, as shown by the present examples, control of the milling method and of the particle size distribution of the processed $H$-$Nb_2O_5$ material has been shown to improve the capacity of $H$-$Nb_2O_5$ when acting as an active electrode material even when delithiated at high rates of e.g. 5C and 10C. These are important results in demonstrating the advantages of the invention for providing electrodes for use in high-power batteries designed for fast charge/discharge.

In a second aspect, the invention provides a method of making an electrochemical cell, the method comprising making an electrode by following the method of the first aspect, and forming an electrochemical cell comprising the electrode. Preferably the electrode forms the anode of the electrochemical cell. Preferably the electrochemical cell is a metal-ion battery such as a lithium-ion or a sodium-ion battery, most preferably a lithium-ion battery.

The invention provides electrodes and electrochemical cells obtainable from the first and second aspects.

## Summary of the Figures

Figure 1. Particle size distribution of Examples 1-6
Figure 2. XRD of Examples 1-6
Figure 3. SEM of powders of Examples 1, 2, 5, and 6
Figure 4: SEM of electrodes obtained using powders of Examples 1, 2, and 6
Figure 5. Particle size distribution of Examples 7-9
Figure 6. SEM of powders of Examples 7-9
Figure 7. SEM of electrodes obtained using powders of Examples 7-9
Figure 8: XRD of Examples 7-9

## Detailed Description of the Invention

The starting material used in the process is $H$-$Nb_2O_5$, which is a polymorph of $Nb_2O_5$ having a Wadsley-Roth crystal structure. Wadsley-Roth crystal structures are considered to be a crystallographic off-stoichiometry of the $MO_3$ ($ReO_3$) crystal structure containing crystallographic shear, with simplified formula of $MO_{3-x}$. As a result, these structures typically contain $[MO_6]$ octahedral subunits in their crystal structure alongside others. The $H$-$Nb_2O_5$ crystal structure has an array of octahedral units arranged in a block structure, with a combination of both $(3{\times}4)_1$ and $(3{\times}5)_\infty$ $ReO_3$-like blocks. The blocks are infinite parallel to b, and the subscripts 1 and $\infty$ denote block connectivity in the ac plane. Further information on crystal structures of $Nb_2O_5$ may be found at Griffith et al., J. Am. Chem. Soc. 2016, 138, 28, 8888-8899. The crystal structure of a material may be determined by analysis of X-ray diffraction (XRD) patterns, as is widely known. For instance, XRD patterns obtained from a given material can be compared to known XRD patterns to confirm the crystal structure, e.g. via public databases such as the ICDD crystallography database. Rietveld analysis and Pawley analysis can also be used to determine the crystal structure of materials, in particular for the unit cell parameters. The crystal structure of $H$-$Nb_2O_5$ is available at ICDD crystallography database entry JCPDS 37-1468.

The starting $H$-$Nb_2O_5$ material may have a phase purity of >80 wt% $H$-$Nb_2O_5$, >90 wt% $H$-$Nb_2O_5$, or >95 wt%, or about 100 wt% $H$-$Nb_2O_5$. Phase purity refers to the proportion of the $Nb_2O_5$ that adopts the $H$-$Nb_2O_5$ crystal structure as opposed to other crystal structures of $Nb_2O_5$. Phase purity may be determined by X-ray diffraction. The starting $H$-$Nb_2O_5$ material may be substantially pure $H$-$Nb_2O_5$, for example it may contain unavoidable impurities arising due to the manufacturing process. The starting $H$-$Nb_2O_5$ material may be doped with additional cations and/or anions, provided that the crystal structure corresponds to the $H$-$Nb_2O_5$ crystal structure. The term 'corresponds' can be understood to mean that that peaks in an X-ray diffraction pattern may be shifted by no more than 0.5 degrees (preferably shifted by no more than 0.25 degrees, more preferably shifted by no more than 0.1 degrees) from corresponding peaks in the reference X-ray diffraction pattern.

The starting $H$-$Nb_2O_5$ material may be obtained from commercial suppliers. Alternatively, the starting $H$-$Nb_2O_5$ material may be made by annealing a niobium oxide precursor (e.g. $NbO_2$, other polymorphs of $Nb_2O_5$, $Nb_2O_5$ hydrates) in air at above 900 °C, e.g. at 1100-1300°C. The formation of $H$-$Nb_2O_5$ may then be confirmed by XRD. The annealing time may be at least 30 minutes, or at least 1 hour. The starting material is typically obtained at relatively large particle sizes unsuitable for use as an active electrode material. For example, the starting $H$-$Nb_2O_5$ material may have a $D_{50}$ particle diameter of >20$\mu$m, 25-150 $\mu$m, or 30-100 $\mu$m.

The term "particle diameter" refers to the equivalent spherical diameter (esd), i.e. the diameter of a sphere having the same volume as a given particle, where the particle volume is understood to include the volume of any intra-particle pores. The terms "$D_n$" and "$D_n$ particle diameter" refer to the diameter below which n% by volume of the particle population is found, i.e. the terms "$D_{50}$" and "$D_{50}$ particle diameter" refer to the volume-based median particle diameter below which 50% by volume of the particle population is found. Where a material comprises primary crystallites agglomerated into secondary particles, it will be understood that the particle diameter refers to the diameter of the secondary particles. Particle diameters can be determined by laser diffraction. Particle diameters can be determined in accordance with ISO 13320:2009, for example using Mie theory.

The starting H-$Nb_2O_5$ material typically has a relatively low surface area. For example, the starting material may have a BET surface area of <0.8 $m^2$/g or <0.6 $m^2$/g. The term "BET surface area" refers to the surface area per unit mass calculated from a measurement of the physical adsorption of gas molecules on a solid surface, using the Brunauer-Emmett-Teller theory. For example, BET surface areas can be determined in accordance with ISO 9277:2010.

The starting H-$Nb_2O_5$ material is jet milled and classified. Jet milling is a powder comminution technique, where powered material is accelerated by high pressure gas or steam and cause inter-particle collisions to reduce the particle size. Two common designs are spiral jet mills and fluidised-bed jet mills. A spiral jet mill typically has a cylindrical grinding chamber with several gas nozzle presented in the direction of a tangent. Selection of particles sizes is carried out by the aerodynamic properties of the particles and the spiral design, which gives good control of fineness. A fluidised-bed jet mill typically has a grinding chamber where gas nozzles are arranged radially in the chamber wall and form fluidised bed. The jet milling may comprise fluidised bed jet milling. The jet milling may be achieved without the use of spiral jet milling (e.g. it may consist of fluidised bed jet milling).

Classification is typically achieved by air classification, e.g. using a centrifugal forced vortex air classifier. The desired particle size distribution may be achieved by controlling the process parameters e.g. the centrifugal force and suction force for filtering powder with certain particle size.

Other common methods for powder comminution are impaction millings and high-shear millings. In impaction milling, powdered material is milled by mechanical impaction with a high velocity component, which could be gravitational energy (hammer mill), or kinetic energy (high speed rotor/stator/pin etc.). High shear milling consists of a rotating container or a rotor, so the grinding component and powder material interacts with shear force to reduce particle size.

A material which has been jet milled and classified as opposed to other powder comminution methods may be identified by SEM. Specifically, an SEM image of a material which has been jet milled and classified to the particle size parameters defined herein will be homogenous, free from the very fine particles and from larger particles which may be expected in an SEM image of a material comminuted by other methods. Electrodes comprising the processed H-$Nb_2O_5$ material may be identified as having a homogenous surface, free from large cavities and large particles.

The processed H-$Nb_2O_5$ material has a $D_{50}$ particle diameter of 2.2-15 $\mu$m; or optionally 2.5-12 $\mu$m, 3.0-10 $\mu$m, or 4.0-8.0 $\mu$m.

The processed H-$Nb_2O_5$ material has a particle size distribution span $(D_{90}-D_{10})/D_{50}$ of <1.90; or optionally <1.80, <1.60, or <1.50. For example, the particle size distribution span $(D_{90}-D_{10})/D_{50}$ may be in the range of >0.2 to <1.90 or >0.5 to <1.50.

The combination of the $D_{50}$ particle diameter and the span in the specific ranges defined herein, for a material processed by jet milling and classification, have been found to improve the properties of a H-$Nb_2O_5$ material for use as an active electrode material. For instance, as shown by the present examples, a significant improvement in capacity at high de-lithiation rates of e.g. 5C and 10C is provided, compared to alternative particle size parameters and milling methods. It is theorised that particle size and distribution of active electrode materials directly impact the performance of Li-ion cells in several aspects: 1) Conductivity. Active electrode materials with larger particle sizes and broad distributions lead to nonuniform electrodes and poor processability at industrial scale by e.g. roll-to-roll coating processes, which in turn results in poor electronic conductivity of the electrode, and not consistent performance. Moreover, larger particle sizes have a longer Li-ion diffusion path, decreasing the performance of the cell at high rates. 2) Side reactions. Active electrode materials with small particle sizes correspond to high specific surface areas, causing more undesired side reactions with electrolyte, resulting in material degradation and short cycle life. The inventors have found that the specified $D_{50}$ particle size and particle size distribution span provide the optimum balance of these factors for H-$Nb_2O_5$. Moreover, the use of jet milling and classification has been found to be a particularly advantageous way of achieving these parameters. Conventional powdered material size reduction techniques include impaction milling and high shear milling. However, these two types of milling are prone to inducing contamination due to direct contact between the powder and the milling media, and have poor size distribution control at <20 $\mu$m particle sizes. Jet milling and classification avoids these issues, and by control of the processing parameters (e.g. the centrifugal force and suction force), the desired particle size parameters can be readily obtained. Accordingly, the combination of the particle size parameters, when achieved by jet milling and classification, has been found to lead to a surprising improvement in the properties of H-$Nb_2O_5$ for use as an active electrode material.

An additional definition of the particle size distribution span is $(D_{95}-D_5)/D_{50}$. The processed H-$Nb_2O_5$ material

may have a particle size distribution span $(D_{95}-D_5)/D_{50}$ of <2.50, <2.25, or <2.0. For example, the particle size distribution span $(D_{95}-D_5)/D_{50}$ may be in the range of >0.3 to <2.50 or >0.6 to <2.0.

The processed $H$-$Nb_2O_5$ material has a $D_{10}$ particle diameter of >0.7 $\mu$m, 1.0-8.0 $\mu$m, or 1.5-4.0 $\mu$m. The processed $H$-$Nb_2O_5$ may have a $D_{90}$ particle diameter of <30 $\mu$m, 4.5-20 $\mu$m, or 5.5-15 $\mu$m. The processed $H$-$Nb_2O_5$ material may have a BET surface area of >0.7 $m^2/g$, or 1-20 $m^2/g$, or 0.8-2.50 $m^2/g$.

The $H$-$Nb_2O_5$ crystal structure is preferably maintained following the jet milling and classification. Accordingly, the processed $H$-$Nb_2O_5$ material may have a phase purity of >80 wt% $H$-$Nb_2O_5$, >90 wt% $H$-$Nb_2O_5$, or >95 wt%, or about 100 wt% $H$-$Nb_2O_5$. The processed $H$-$Nb_2O_5$ material may be substantially pure $H$-$Nb_2O_5$. There may be some changes in the relative intensity of the characteristic peaks of the $H$-$Nb_2O_5$ crystal structure following the jet milling and classification, which may result from the introduction of defects into the crystal structure via the milling process. The intensity ratio of the peak in the XRD pattern of the processed $H$-$Nb_2O_5$ material at about 23.7°2θ to the peak at about 24.4°2θ may be in the range of 0.7-1.3 or 0.8-1.2.

The processed $H$-$Nb_2O_5$ material is formed into an electrode such that the processed $H$-$Nb_2O_5$ material is an active electrode material. An active electrode material may be understood to mean a material which can chemically react with lithium ions to store and release them reversibly in a controlled manner. The electrode is typically of the form of an electrode composition in electrical contact with a current collector. A current collector is typically a metal foil, e.g. copper or aluminium foil. The electrode may be made by forming a slurry of the processed $H$-$Nb_2O_5$ material and a solvent. The slurry may comprise at least one other component selected from a binder, a conductive additive, a different active electrode material, and mixtures thereof. The slurry may be deposited onto a current collector and the solvent removed, thereby forming an electrode composition on the current collector. Further steps, such as heat treatment to cure any binders and/or calendaring of the electrode layer may be carried out as appropriate. For example, the solvent may be removed by drying e.g. at temperatures of 30-100°C. The electrode may be calendared to a density of 2-3.5 or 2.3-2.9 g cm$^{-3}$. The electrode composition may form a layer with a thickness in the range of from 5 $\mu$m to 2 mm, preferably 5 $\mu$m to 1 mm, preferably 5 $\mu$m to 500 $\mu$m, preferably 5 $\mu$m to 200 $\mu$m, preferably 5 $\mu$m to 100 $\mu$m, preferably 5 $\mu$m to 50 $\mu$m.

Alternatively, the slurry may be formed into a freestanding film or mat comprising the active electrode material, for instance by casting the slurry onto a suitable casting template, removing the solvent, and then removing the casting template. The resulting film or mat is in the form of a cohesive, freestanding mass which may then be bonded to a current collector by known methods.

Optionally, the processed $H$-$Nb_2O_5$ material forms at least 10 wt.%, 50 wt.%, or 75 wt.% of the total active electrode material in the electrode. The processed $H$-$Nb_2O_5$ material may form the sole active anode material in the electrode.

The electrode composition may further comprise at least one other component selected from a binder, a conductive additive, a different active electrode material, and mixtures thereof. For instance, one electrode composition comprises about 92 wt% processed $H$-$Nb_2O_5$ material, about 5 wt% conductive additive (e.g. carbon black), and about 3 wt% binder (e.g. poly(vinyldifluoride)), based on the total dry weight of the anode composition.

Examples of suitable binders include polyvinylidene fluoride and its copolymers (PVDF), polytetrafluoroethylene (PTFE) and its copolymers, polyacrylonitrile (PAN), poly(methyl)methacrylate or poly(butyl)methacrylate, polyvinyl chloride (PVC), polyvinyl formal, polyetheramide, polymethacrylic acid, polyacrylamide, polyitaconic acid, polystyrene sulfonic acid, polyacrylic acid (PAA) and alkali metal salts thereof, modified polyacrylic acid (mPAA) and alkali metal salts thereof, cellulose-based polymers, carboxymethylcellulose (CMC), modified carboxymethylcellulose (mCMC), sodium carboxymethylcellulose (Na-CMC), polyvinylalcohol (PVA), alginates and alkali metal salts thereof, butadieneacrylonitrile rubber (NBR), hydrogenated form of NBR (HNBR), styrene-butadiene rubber (SBR) and polyimide. The binder may be present in the electrode composition at 0-30 wt%, or 0.1-10 wt%, or 0.1-5 wt%, based on the total dry weight of the electrode composition.

Conductive additives are preferably non-active materials which are included so as to improve electrical conductivity between the active electrode material and between the active electrode material and the current collector. The conductive additives may suitably be selected from graphite, carbon black, carbon fibers, vapor-grown carbon fibres (VGCF), carbon nanotubes, graphene, acetylene black, ketjen black, metal fibers, metal powders and conductive metal oxides. Preferred conductive additives include carbon black and carbon nanotubes. Conductive additives may be present in the electrode composition at 0-20 wt%, 0.1-10 wt%, or 0.1-5 wt%, based on the total dry weight of the electrode composition.

The processed $H$-$Nb_2O_5$ material may be present in the electrode composition at 100-50 wt%, 99.8-80 wt%, or 99.8-90 wt%, based on the total dry weight of the electrode composition. When the active electrode material is present at 100 wt.% of the electrode composition it may form a solid-state electrode.

When a different active anode material is present in addition to the processed $H$-$Nb_2O_5$ material, it may be selected from lithium titanium oxide, titanium niobium oxide, an oxide comprising niobium and at least one other cation, graphite, hard carbon, soft carbon, silicon, doped versions thereof, and mixtures thereof.

The processed $H$-$Nb_2O_5$ material may be subjected to further processes after the jet milling and classifying and before forming the electrode. For example, the processed $H\text{-}Nb_2O_5$ material may be coated with carbon, e.g. to improve its surface electronic conductivity and/or to prevent reactions with electrolyte. The processed $H\text{-}Nb_2O_5$ material may be coated with aluminium oxide, zirconium oxide, an oxide comprising niobium and at least one other cation, organic or inorganic fluorides, organic or inorganic phosphates, titanium oxide, lithiated versions thereof, and mixtures thereof.

The electrode may be incorporated into an electrochemical cell. Preferably, the electrochemical cell comprises the electrode as an anode, a cathode, and an electrolyte disposed between the anode and cathode. The electrochemical cell is preferably a metal-ion battery such as a lithium-ion battery or a sodium-ion battery, most preferably a lithium-ion battery.

The electrochemical cell may be formulated to have a N/P ratio >1, wherein N/P is defined as:

$$\frac{\text{areal loading (mgcm}^{-2})(\text{anode}) \times \text{active fraction(wt\%)(anode)} \times \text{first lithiation capacity(mAhg}^{-1})(\text{anode})}{\text{areal loading (mgcm}^{-2})(\text{cathode}) \times \text{active fraction(wt\%)(cathode)} \times \text{first delithiation capacity(mAhg}^{-1})(\text{cathode})}$$

The areal loading (mgcm$^{-2}$) is the dry loading of the electrode composition, not taking into account the current collector.

The active fraction (wt%) is the percentage of the dry electrode composition that is active material.

The first lithiation/delithiation capacity (mAhg$^{-1}$) is the specific capacity at C/10 at 25 °C for the first lithiation cycle for the anode or the first delithiation cycle for the cathode measured on an equivalent half-cell with a Li-metal counter electrode. An equivalent half-cell can be understood to utilise the same electrode composition deposited at the same areal loading and active fraction as the full cell.

Cell charge rate is typically expressed as a "C-rate". A 1C charge rate means a charge current such that the cell is fully charged in 1 h, 10C charge means that the battery is fully charged in 1/10th of an hour (6 minutes). C-rate may be defined from the reversible capacity of the cell within appropriate voltage limits, e.g. for a cell that exhibits 1.0 mAh cm$^{-2}$ capacity within the voltage limits of 1.2-3.15 V, a 1C-rate corresponds to a current density applied of 1.0 mA cm$^{-2}$.

The first lithiation/delithiation capacity is measured on an equivalent half-cell. For the anode, the first constant current C/10 lithiation (discharge, negative current) capacity (vs Li/Li+) at 25 °C is measured. For the cathode, the first constant current C/10 delithiation (charge, positive current) capacity (vs Li/Li+) at 25 °C is measured.

N/P may be in the range of >1-2, or 1.01-1.5, or preferably 1.05-1.3. Alternatively, N/P may be $\leq 1$, or < 1, such as 0.7-0.95.

The cathode comprises an active cathode material which may be selected from nickel-based layered oxides of the class $LiNi_{1-x}M_xO_2$ where M = Co, Mn, Al such as NMCs - lithium nickel manganese cobalt oxides, NCAs - lithium cobalt aluminium oxides, and LCOs - lithium cobalt oxides; and LNMOs - lithium nickel manganese oxides (e.g. $LiNi_{0.5}Mn_{1.5}O_4$). Active cathode materials are widely available from commercial suppliers. Active cathode materials may be doped with additional cations and/or anions.

The choice of the active electrode material can affect the appropriate voltage range, including for determining the first lithiation/delithiation capacity. For example, appropriate voltage ranges may be LNMO: 5.2-3V, upper cut off 5.2V; NCA, NMC, and LCO: 4.5-2.7V, upper cut off 4.5V; processed $H\text{-}Nb_2O_5$ material: 3-0V, lower cut off 0V. Narrower ranges may be LNMO: 5-3V, upper cut off 5V; NCA, NMC, and LCO: 4.3-2.7V, upper cut off 4.3V; processed $H\text{-}Nb_2O_5$ material: 3V-1.0V, lower cut off 1.0V.

An appropriate voltage range may be determined empirically. For example, the voltage profile correlates to the change in energy state of the anode and cathode materials associated with removal or insertion of electrons and ions. The cut-off voltage for the cell may be selected to fall before a specific inflection point in the voltage profile which corresponds to a rise in energy state of one or both electrodes beyond a critical level which leads the crystal structure to decay to a lower energy structure at a rate which is significantly harmful to the cell's performance. The absolute voltage at which this happens is a function of the electrode potentials of both electrodes, but can be calculated by use of a common reference electrode and need not be determined experimentally for well-established material families with reliable standard electrochemical behaviour.

The cathode active material is preferably in particulate form, e.g. having a $D_{50}$ particle diameter in the range of 0.1-100 $\mu$m, or 0.5-50 $\mu$m, or 1-20 $\mu$m.

The electrolyte may include any material suitable for metal-ion battery operation, preferably lithium-ion battery operation. For example, the electrolyte may be a non-aqueous solution (e.g., an organic electrolytic solution). The electrolyte may include one or more non-aqueous solvents and a salt that is at least partially dissolved in the solvent. For example, the solvent may include an organic solvent, such as, e.g., ethylene carbonate (EC) and/or other carbonate-based solvents, or butyrate, or acetate, or mixtures thereof. The solvent may include 1 M $LiPF_6$ dissolved in an aprotic solvent mixture, such as a 1:1 by weight of a mixture of ethylene carbonate and other carbonate-based solvents or butyrate or acetate. Salts suitable for use in the invention include $LiPF_6$, $LiSbF_6$, $LiBF_4$, LiTFSI, LiFSI, $LiAlCl_4$, $LiAsF_6$, $LiClO_4$, $LiGaCl_4$, $LiC(SO_2CF_3)_3$, $LiN(CF_3SO_2)_2$, $Li(CF_3SO_3)$, $LiB(C_6H_4O_2)_2$, LiBOB (lithium bis(oxalate) borate), and LiDFOB (lithium difluoro (oxalate) borate). Low-viscosity solvents (e.g., organic solvents) suitable for use in the electrolyte may include, but are not limited to ethyl methyl carbonate (EMC), dioxlane (DOL), ethyl acetate (EA); propylene acetate (PA); butyl acetate (BA); methyl butyrate (MB); ethyl butyrate (EB); dimethyl carbonate (DMC); diethyl carbonate (DEC); 1,2-dimethoxyethane (DME); tetrahydrofuran (THF); methyl acetate (MA); diglyme (DGL); triglyme; tetraglyme; cyclic carbonates; cyclic esters; cyclic amides; propylene carbonate (PC); methyl propyl carbonate (MPC); acetonitrile; dimethyl sulfoxide (DMS); dimethyl formamide; dimethyl acetamide; gamma-butyrolactone (GBL); and N-methyl-pyrrolidinone (NMP); as well as various mixtures or combinations thereof.

**Examples**

Example 1 was obtained from a commercial supplier. It was milled to obtain Examples 2-9.

Examples 2, 3, and 7-9 were made by fluidised bed jet milling with wheel classification (Alpine fluidised bed opposed jet mill AFG 100 for Examples 2 and 7-9 and AFG 200 for Example 3).

Example 2 was milled at 4.5 bar pressure with 2.5mm nozzle diameter. Classifier speed was set at 6000 rpm.

Example 3 was milled at 6 bar pressure with 5mm nozzle diameter. Classifier speed was set at 6000 rpm.

Example 4 was made by spiral jet milling (MC DecJet® 100). Venture pressure was set at 9 bar and ring pressure was set at 8 bar. No classification was done for this example.

Example 5 was made by rolling ball milling with zirconia balls in a 5L PTFE jar. Diameter of milling balls are 5mm and 1 mm. Material to ball ratio is 10:1. Rolling speed was 400 rpm. Milling time of 5A was 4 hours and milling time of 5B was 12 hours.

Example 6 was made by impaction milling (Retsch ZM200 impaction mill) with continuous milling method. The milling speed was set at 18000 rpm.

Example 7 was milled at 5 bar pressure with 2.5mm nozzle diameter. Classifier speed was set at 8000 rpm.

Example 8 was milled at 4 bar pressure with 2.5mm nozzle diameter. Classifier speed was set at 10000 rpm.

Example 9 was milled at 4 bar pressure with 2.5mm nozzle diameter. Classifier speed was set at 3000 rpm.

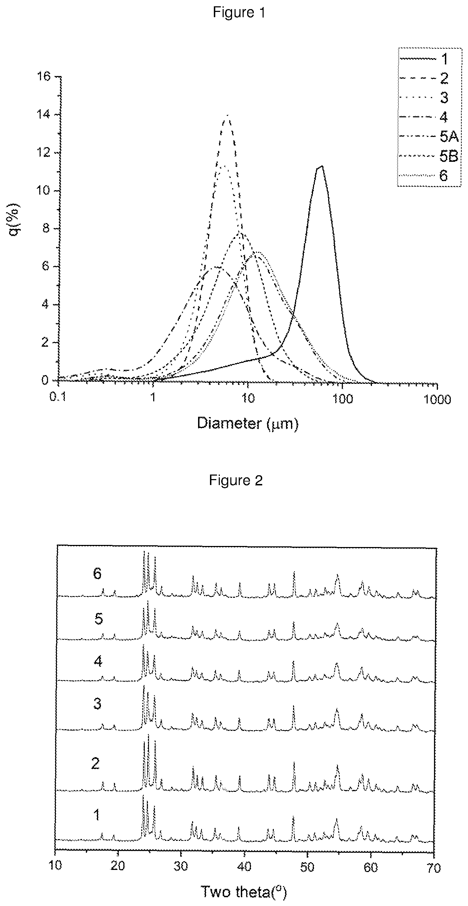

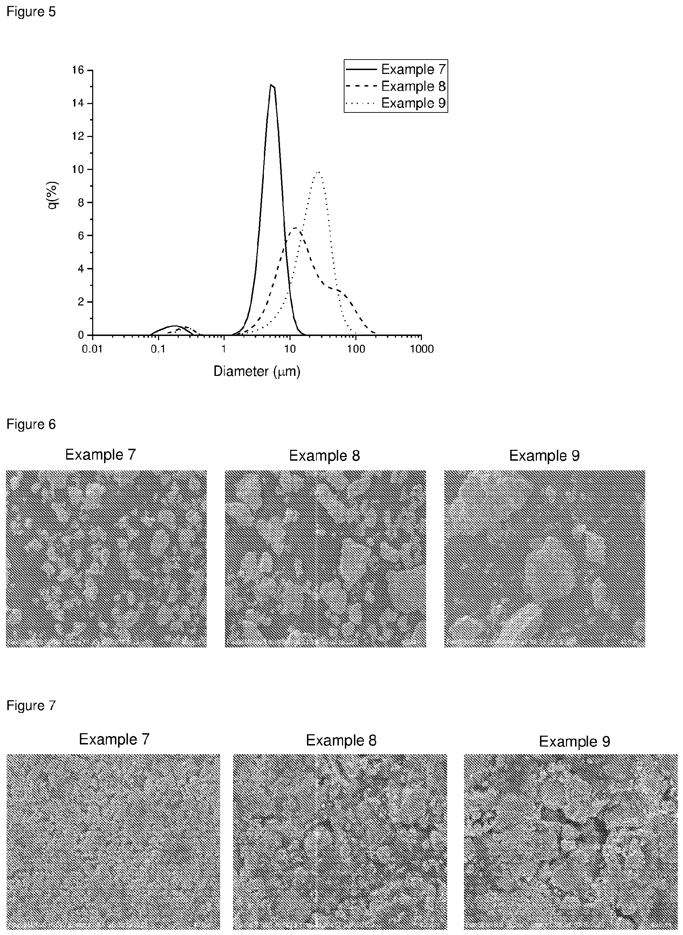

The particle size distribution of samples was measured using Horiba Partica LA-960 with a dry dispenser (Figures 1 and 5 and Table 1).

The surface area was measured using BET surface area analysis with $N_2$ on a BELSORP-miniX instrument at 77.35 K (Table 2).

Table 1. Particle size

| | Description | $D_5$ | $D_{10}$ | $D_{50}$ | $D_{90}$ | $D_{95}$ | $(D_{95}-D_5)/D_{50}$ Span | $(D_{90}-D_{10})/D_{50}$ Span |
|---|---|---|---|---|---|---|---|---|
| Example 1* | Starting H-$Nb_2O_5$ material | 5.4 | 10.3 | 46.4 | 82.0 | 96.0 | 1.95 | 1.55 |
| Example 2 | Fluidised bed Jet milling with classification | 2.6 | 3.1 | 5.3 | 8.5 | 9.7 | 1.34 | 1.02 |
| Example 3 | Fluidised bed Jet milling with classification | 1.3 | 2.1 | 4.6 | 8.1 | 9.5 | 1.78 | 1.30 |
| Example 4* | Spiral jet milling | 0.4 | 1.0 | 3.9 | 11.2 | 16.1 | 4.02 | 2.62 |
| Example 5A* | Rolling ball milling | 1.5 | 2.3 | 6.9 | 16.2 | 20.9 | 2.81 | 2.01 |
| Example 5B* | Rolling ball milling | 0.4 | 0.5 | 2.2 | 4.8 | 5.7 | 2.36 | 1.95 |
| Example 6* | Impaction milling | 2.2 | 3.6 | 11.2 | 33.6 | 45.1 | 3.83 | 2.68 |
| Example 7 | Fluidised bed Jet milling with classification | 2.3 | 3.0 | 5.1 | 7.9 | 9.0 | 1.3 | 1.0 |
| Example 8* | Fluidised bed Jet milling with classification | 3.2 | 4.8 | 14.2 | 60.9 | 82.5 | 5.6 | 3.9 |

(continued)

| | Description | $D_5$ | $D_{10}$ | $D_{50}$ | $D_{90}$ | $D_{95}$ | $(D_{95}-D_5)/D_{50}$ Span | $(D_{90}-D_{10})/D_{50}$ Span |
|---|---|---|---|---|---|---|---|---|
| Example 9* | Fluidised bed Jet milling with classification | 5.0 | 8.0 | 21.3 | 40.3 | 48.0 | 2.0 | 1.5 |
| *Comparative | | | | | | | | |

Table 2. Surface area

| | Example 1* | Example 2 | Example 4* | Example 5A* |
|---|---|---|---|---|
| BET Surface Area ($m^2$/g) | 0.57 | 1.23 | 2.24 | 1.39 |

## **Materials Characterisation**

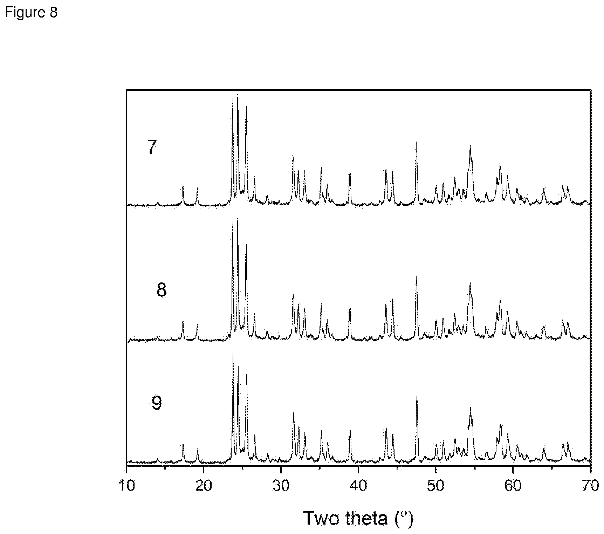

The phase purity of samples was analysed using a Rigaku Miniflex powder X-ray diffractometer in 2θ range (10-70°) at 1 °/min scan rate (Figures 2 and 8 and Table 3).

Example 1 was obtained as a starting $H\text{-}Nb_2O_5$ material with a phase purity of 100 wt%, as determined by XRD. The XRD patterns for all of the milled examples (2-9) show that the purity is maintained after the milling. Some differences in the relative intensity of the two characteristic peaks at ~23.7° and ~24.4° 2θ were observed, which may be due to differing levels of defects introduced into the $H\text{-}Nb_2O_5$ crystal structure.

Table 3. Intensity ratio of the peak at ~23.7° to the peak at ~24.4°

| Example | Intensity ratio |
|---|---|
| 1* | 1.13 |
| 2 | 0.86 |
| 3 | 1.18 |
| 4* | 1.25 |
| 5* | 0.82 |
| 6* | 1.05 |
| 7 | 0.96 |
| 8* | 0.96 |
| 9* | 1.12 |

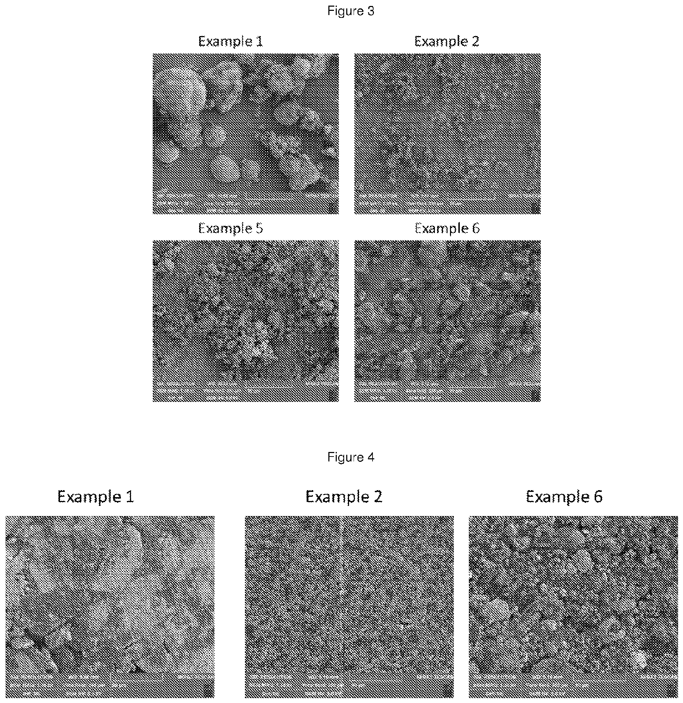

SEM results (Figures 3 and 6) showed that Example 1 had most spherical-shaped particles with largest particle size. Surface of these particles were composed of sintered primary particles. Example 2 showed particles with most homogeneous size. All particles in the SEM were below 15 μm. Particles in Example 5 showed much wider size distribution comparing with Example 2 with largest particle around 25 μm and smallest particle below 1 μm. Example 6 showed the second largest particle size among the four examples imaged, with some particles around 25 μm and unmilled particles presented. Example 7 showed homogenously-sized particles under SEM with all particles below 12 μm. Example 8 showed a wide spread of particle sizes wth particles larger than 20 μm and particles smaller than 10 μm. Example 9 showed a majority of large particles with occasional particles smaller than 5 μm. These results are consistent with the particle size distribution results obtained from laser diffraction presented in Table 1.

When made into electrodes (Figures 4 and 7), powders with large particle size were unable to provide a homogenous electrode surface. The surface of the electrodes presented with too much polymer binder with large cavities (e.g., Example 1), damaging the conductivity, or large particles making the surface uneven (e.g, Example 6), damaging the cell's life. The electrodes prepared from Examples 8 and 9 showed an uneven surface with large cavities. In contrast, the electrode surface of Examples 2 and 7 are homogenous and free from large particles.

**Electrochemical Characterisation**

Li-ion cell charge rate is usually expressed as a "C-rate". A 1C charge rate means a charge current such that the cell is fully charged in 1 h, 10C charge means that the battery is fully charged in 1/10th of an hour (6 minutes). C-rate hereon is defined from the reversible capacity of the anode observed within the voltage limits applied in its second cycle de-lithiation, i.e. for an anode that exhibits 1.0 mAh $cm^{-2}$ capacity within the voltage limits of 1.1 - 3.0 V, a 1C rate corresponds to a current density applied of 1.0 mA $cm^{-2}$. In a typical material as described herein, this corresponds to ~215 mA/g of active material.

Electrochemical tests were carried out in half-coin cells (CR2032 size) for analysis. In half-coin cell tests, the active material is tested in an electrode versus a Li metal electrode to assess its fundamental performance. In the below examples, the active material composition to be tested was combined with N-Methyl Pyrrolidone (NMP), carbon black (Super P) acting as a conductive additive, and poly(vinylidenedifluoride) (PVDF) binder and mixed to form a slurry using a lab-scale centrifugal planetary mixer. The non-NMP composition of the slurries was 92 wt% active material, 5 wt% conductive additive, 3 wt% binder. The slurry was coated on an Al foil current collector to the desired loading of 69 - 75 g $m^{-2}$ by doctor blade coating and dried by heating. The electrodes were then calendared to a density of 2.5 - 2.7 g $cm^{-3}$ at 80°C to achieve targeted porosities of 32-37%. Electrodes were punched out at the desired size and combined with a separator (Celgard porous PolypropyleneP/PolyEthylene), Li metal, and electrolyte (1.3 M $LiPF_6$ in EthylCarbonate/DiethylCarbonate) inside a steel coin cell casing and sealed under pressure. Cycling was then carried out at 23°C at low current rates (C/10) for 2 full cycles of lithiation and de-lithiation between 1.1 - 3.0 V. Afterwards, the cells were tested for their performance at increasing current densities. During these tests, the cells were cycled asymmetrically at 23°C, with a slow lithiation (C/5) followed by increasing de-lithiation rates (e.g. 1C, 5C, 10C) to probe the capacity retention at high rates.

Data has been averaged from 3-5 cells prepared from the same electrode coating, with the error shown from the standard deviation. Accordingly, the data represent a robust study showing the improvements achieved by the materials according to the invention compared to prior materials. These data are shown in Tables 4a and 4b. The first cycle coulombic efficiency is defined as the percentage of the capacity of the first lithiation step which is returned in the first de-lithiation step and the formation capacity is defined as the capacity of the second de-lithiation step

Table 4a. Electrochemical data for Examples 1-6

| (mAh/g) | Example 1* | Example 2 | Example 3 | Example 4* | Example 5A* | Example 5B* | Example 6* |
|---|---|---|---|---|---|---|---|
| 1st cycle CE | 98%(1%) | 95%(0.2%) | 96%(0.1%) | 95%(0.1%) | 91%(0.1%) | 91%(0.1%) | 96%(0.0%) |
| Formation capacity | 212(3) | 218(2) | 216(3) | 215(2) | 198(1) | 210(2) | 210(2) |
| 0.5C | 198(3) | 205(2) | 207(3) | 204(3) | 188(1.4) | 198(2.4) | 199(2) |
| 1C | 186(3) | 200(2) | 202(2) | 196(3) | 182(1) | 193(2.2) | 193(2) |
| 2C | 171(3) | 197(2) | 199(2) | 188(2) | 175(1) | 187(1.9) | 187(2) |
| 5C | 147(4) | 192(2) | 193(2) | 177(1) | 166(1.0) | 179(2.7) | 179(3) |
| 10C | 120(6) | 185(3) | 185(3) | 166(1) | 153(1) | 170(2.7) | 170(3) |

Table 4b. Electrochemical data for Examples 7-9

| (mAh/g) | Example 7 | Example 8* | Example 9* |
|---|---|---|---|
| 1st cycle CE | 96.8(0.3)% | 98.4(3.5)% | 97.9(2.2)% |
| Formation capacity | 215.8(3.9) | 217.2(2.1) | 216.5(3.9) |
| 0.5C | 206.3(1.6) | 202.6(2.6) | 201.6(3.6) |
| 1C | 200.9(1.6) | 194.7(2.4) | 195.0(3.7) |
| 2C | 198.1(1.6) | 188.9(2.2) | 190.5(3.8) |
| 5C | 195.2(1.7) | 181.6(1.9) | 184.0(3.6) |
| 10C | 191.2(1.24) | 165.9(16.0) | 174.1(2.7) |

## Discussion

Examples 2, 3, and 7 which were jet milled and classified according to the invention, were found to provide improved capacities at all de-lithiation rates when incorporated into an electrode, compared to the starting material of Example 1. Notably, Examples 2, 3, and 7 provided improved capacities at all de-lithiation rates compared to Example 4 (jet milled but not classified, thus having a higher particle size distribution span), Examples 5A and 5B (rolling ball milled), Example 6 (impaction milled), Example 8 (jet milled and classified, but having a higher particle size distribution span), and Example 9 (jet milled and classified, but having a higher $D_{50}$ particle size). The improvement provided by the invention is particularly apparent at the high de-lithiation rate of 10C, an important result demonstrating the utility of the invention in providing a niobium oxide active electrode material for use in high-power applications.

## Claims

1. A method of making an electrode, the method comprising:

   providing a starting $H$-$Nb_2O_5$ material;
   jet milling and classifying the starting material to provide a processed $H$-$Nb_2O_5$ material having a $D_{50}$ particle diameter of 2.2-15 $\mu$m and a particle size distribution span $(D_{90}-D_{10})/D_{50}$ of <1.90 when $D_{10}$, $D_{50}$, and $D_{90}$ are determined by laser diffraction; and
   forming an electrode comprising the processed $H$-$Nb_2O_5$ material as an active electrode material.

2. The method of claim 1, wherein the processed $H$-$Nb_2O_5$ material has a particle size distribution span $(D_{95}-D_5)/D_{50}$ of <2.50, <2.25, or <2.0 when $D_5$, $D_{50}$, and $D_{95}$ are determined by laser diffraction; and/or
   wherein the processed $H$-$Nb_2O_5$ material has a particle size distribution span $(D_{90}-D_{10})/D_{50}$ of <1.80, <1.60, or <1.50 when $D_{10}$, $D_{50}$, and $D_{90}$ are determined by laser diffraction.

3. The method of any preceding claim, wherein the processed $H$-$Nb_2O_5$ material has a $D_{50}$ particle diameter of 2.5-12 $\mu$m, 3.0-10 $\mu$m, or 4.0-8.0 $\mu$m when determined by laser diffraction; and/or wherein the processed $H$-$Nb_2O_5$ material has a $D_{10}$ particle diameter of >0.7 $\mu$m, 1.0-8.0 $\mu$m, or 1.5-4.0 $\mu$m when determined by laser diffraction; and/or wherein the processed $H$-$Nb_2O_5$ material has a $D_{90}$ particle diameter of <30 $\mu$m, 4.5-20 $\mu$m, or 5.5-15 $\mu$m when determined by laser diffraction.

4. The method of any preceding claim, wherein the processed $H$-$Nb_2O_5$ material has a BET surface area of >0.7 $m^2$/g, or 1-20 $m^2$/g, or 0.8-2.50 $m^2$/g when determined in accordance with ISO 9277:2010.

5. The method of any preceding claim, wherein the starting $H$-$Nb_2O_5$ material has a $D_{50}$ particle diameter of >20$\mu$m, 25-150 $\mu$m, or 30-100 $\mu$m when determined by laser diffraction.

6. The method of any preceding claim, wherein the starting $H$-$Nb_2O_5$ material has a phase purity of >80 wt% $H$-$Nb_2O_5$, >90 wt% $H$-$Nb_2O_5$, >95 wt% $H$-$Nb_2O_5$, or 100 wt% $H$-$Nb_2O_5$ when determined by X-ray diffraction.

7. The method of any preceding claim, wherein the intensity ratio of the peak in the XRD pattern of the processed $H$-$Nb_2O_5$ material at 23.7° 2θ to the peak at 24.4° 2θ is in the range of 0.7-1.3 or 0.8-1.2.

8. The method of any preceding claim, wherein the jet milling comprises fluidised bed jet milling or spiral jet milling, or comprises fluidised bed jet milling, or consists of fluidised bed jet milling; and/or wherein the classifying is achieved by a centrifugal forced vortex air classifier.

9. The method of any preceding claim, wherein forming the electrode comprises forming a slurry of the processed $H$-$Nb_2O_5$ material in a solvent, depositing the slurry on a current collector, and removing the solvent; optionally wherein the slurry comprises at least one further component selected from a binder, a conductive additive, a different active electrode material, and mixtures thereof.

10. The method of any preceding claim, wherein the processed $H$-$Nb_2O_5$ material is coated with carbon before forming the electrode.

11. The method of any preceding claim, wherein the processed $H$-$Nb_2O_5$ material forms at least 10 wt.%, 50 wt.%, or 75 wt.% of the total active electrode material in the electrode; and/or wherein the processed $H\text{-Nb}_2\text{O}_5$ material is the sole active electrode material in the electrode.

12. The method of any preceding claim, further comprising forming an electrochemical cell comprising the electrode; optionally wherein the electrochemical cell comprises the electrode as an anode, a cathode, and an electrolyte disposed between the anode and cathode; optionally wherein:

    (i) the electrochemical cell is formulated to have a N/P ratio >1; or
    (ii) the electrochemical cell is formulated to have a N/P ratio $\leq$ 1;

      wherein N/P is defined as:

$$\frac{\text{areal loading (mgcm}^{-2}\text{)(anode)} \times \text{active fraction(wt\%)(anode)} \times \text{first lithiation capacity(mAhg}^{-1}\text{)(anode)}}{\text{areal loading (mgcm}^{-2}\text{)(cathode)} \times \text{active fraction(wt\%)(cathode)} \times \text{first delithiation capacity(mAhg}^{-1}\text{)(cathode)}}$$

      wherein:

          areal loading (mgcm$^{-2}$) is the dry loading of the electrode composition, not taking into account the current collector;
          active fraction (wt%) is the percentage of the dry electrode composition that is active material; first lithiation/delithiation capacity (mAhg$^{-1}$) is the specific capacity at C/10 at 25 °C for the first lithiation cycle for the anode or the first delithiation cycle for the cathode measured on an equivalent half-cell with a Li-metal counter electrode.

13. The method of claim 12, wherein the electrochemical cell is a metal-ion battery such as a lithium-ion battery or a sodium-ion battery, or wherein the electrochemical cell is a lithium-ion battery.

14. An electrode obtained by the method of any of claims 1-11.

15. An electrochemical cell obtained by the method of claim 12 or claim 13.


**Patentansprüche**

1. Verfahren zum Herstellen einer Elektrode, wobei das Verfahren Folgendes umfasst:

    Bereitstellen eines H-Nb$_2$O$_5$-Ausgangsmaterials;
    Strahlvermahlen und Klassifizieren des Ausgangsmaterials, um ein verarbeitetes H-Nb$_2$O$_3$-Material mit einem D$_{50}$-Teilchendurchmesser von 2,2-15 $\mu$m und einer Teilchengrößenverteilungsspanne (D$_{90}$-D$_{10}$)/D$_{50}$ von < 1,90, bei Bestimmung von D$_{10}$, D$_{50}$ und D$_{90}$ mittels Laserbeugung, bereitzustellen; und
    Bilden einer Elektrode, die das verarbeitete H-Nb$_2$O$_5$-Material als aktives Elektrodenmaterial umfasst.

2. Verfahren nach Anspruch 1, wobei das verarbeitete H-Nb$_2$O$_3$-Material eine Teilchengrößenverteilungsspanne (D$_{95}$-D$_5$)/D$_{50}$ von < 2,50, < 2,25 oder < 2,0, bei Bestimmung von D$_5$, D$_{50}$ und D$_{95}$ mittels Laserbeugung, aufweist; und/oder wobei das verarbeitete H-Nb$_2$O$_3$-Material eine Teilchengrößenverteilungsspanne (D$_{90}$-D$_{10}$)/D$_{50}$ von < 1,80, < 1,60 oder < 1,50, bei Bestimmung von D$_{10}$, D$_{50}$ und D$_{90}$ mittels Laserbeugung, aufweist.

3. Verfahren nach einem der vorstehenden Ansprüche, wobei das verarbeitete H-Nb$_2$O$_3$-Material einen D$_{50}$-Teilchendurchmesser von 2,5-12 $\mu$m, 3,0-10 $\mu$m oder 4,0-8,0 $\mu$m, bei Bestimmung mittels Laserbeugung, aufweist; und/oder

    wobei das verarbeitete H-Nb$_2$O$_3$-Material einen D$_{10}$-Teilchendurchmesser von > 0,7 $\mu$m, 1,0-8,0 $\mu$m oder 1,5-4,0 $\mu$m, bei Bestimmung mittels Laserbeugung, aufweist; und/oder
    wobei das verarbeitete H-Nb$_2$O$_5$-Material einen D$_{90}$-Teilchendurchmesser von < 30 $\mu$m, 4,5-20 $\mu$m oder 5,5-15 $\mu$m, bei Bestimmung mittels Laserbeugung, aufweist.

4. Verfahren nach einem der vorstehenden Ansprüche, wobei das verarbeitete H-Nb$_2$O$_5$-Material eine BET-Oberfläche von > 0,7 m$^2$/g oder 1-20 m$^2$/g oder 0,8-2,50 m$^2$/g, bei Bestimmung gemäß ISO 9277:2010, aufweist.

**5.** Verfahren nach einem der vorstehenden Ansprüche, wobei das H-$Nb_2O_5$-Ausgangsmaterial einen $D_{50}$-Teilchendurchmesser von > 20 µm, 25-150 µm oder 30-100 µm, bei Bestimmung mittels Laserbeugung, aufweist.

**6.** Verfahren nach einem der vorstehenden Ansprüche, wobei das H-$Nb_2O_5$-Ausgangsmaterial eine Phasenreinheit von > 80 Gew.-% H-$Nb_2O_3$, > 90 Gew.-% H-$Nb_2O_3$, > 95 Gew.-% H-$Nb_2O_3$ oder 100 Gew.-% H-$Nb_2O_3$, bei Bestimmung mittels Röntgenbeugung (X-ray diffraction - XRD), aufweist.

**7.** Verfahren nach einem der vorstehenden Ansprüche, wobei das Intensitätsverhältnis des Peaks in dem XRD-Muster des verarbeiteten H-$Nb_2O_5$-Materials bei 23,7 °2θ zu dem Peak bei 24,4 °2θ im Bereich von 0,7-1,3 oder 0,8-1,2 liegt.

**8.** Verfahren nach einem der vorstehenden Ansprüche, wobei das Strahlvermahlen Fließbettstrahlvermahlen oder Spiralstrahlvermahlen umfasst oder Fließbettstrahlvermahlen umfasst oder aus Fließbettstrahlvermahlen besteht; und/oder wobei das Klassifizieren mittels eines Zentrifugalkraft-Vortex-Luftklassifikators erzielt wird.

**9.** Verfahren nach einem der vorstehenden Ansprüche, wobei das Bilden der Elektrode das Bilden einer Aufschlämmung des verarbeiteten H-$Nb_2O_5$-Materials in einem Lösungsmittel, das Abscheiden der Aufschlämmung auf einem Stromkollektor und das Entfernen des Lösungsmittels umfasst; wobei die Aufschlämmung gegebenenfalls mindestens einen weiteren Bestandteil umfasst, der aus einem Bindemittel, einem leitfähigen Additiv, einem anderen aktiven Elektrodenmaterial und Mischungen davon ausgewählt ist.

**10.** Verfahren nach einem der vorstehenden Ansprüche, wobei das verarbeitete H-$Nb_2O_3$-Material vor dem Bilden der Elektrode mit Kohlenstoff beschichtet wird.

**11.** Verfahren nach einem der vorstehenden Ansprüche, wobei das verarbeitete H-$Nb_2O_3$-Material mindestens 10 Gew.-%, 50 Gew.-% oder 75 Gew.-% des gesamten aktiven Elektrodenmaterials in der Elektrode bildet; und/oder wobei das verarbeitete H-$Nb_2O_3$-Material das einzige aktive Elektrodenmaterial in der Elektrode ist.

**12.** Verfahren nach einem der vorstehenden Ansprüche, ferner umfassend das Bilden einer elektrochemischen Zelle, die die Elektrode umfasst; wobei die elektrochemische Zelle die Elektrode gegebenenfalls als Anode, als Kathode und als zwischen der Anode und der Kathode angeordneten Elektrolyt umfasst; wobei gegebenenfalls:

(i) die elektrochemische Zelle derart formuliert ist, dass sie ein N/P-Verhältnis > 1 aufweist; oder
(ii) die elektrochemische Zelle derart formuliert ist, dass sie ein N/P-Verhältnis ≤ 1 aufweist;

wobei N/P wie folgt definiert ist:

$$\frac{\text{Flächenbeladung (mgcm}^{-2}\text{)(Anode)} \times \text{aktive Fraktion(Gew.} - \%\text{)(Anode)} \times \text{erste Lithiierungskapazität(mAhg}^{-1}\text{)(Anode)}}{\text{Flächenbeladung (mgcm}^{-2}\text{)(Kathode)} \times \text{aktive Fraktion(Gew.} - \%\text{)(Kathode)} \times \text{erste Delithiierungskapazität(mAhg}^{-1}\text{)(Kathode)}}$$

wobei:

die Flächenbeladung (mgcm$^{-2}$) die Trockenbeladung der Elektrodenzusammensetzung ist, wobei der Stromkollektor nicht berücksichtigt wird;
die aktive Fraktion (Gew.-%) der Prozentsatz der Trockenelektrodenzusammensetzung ist, der aktives Material ist;
die erste Lithiierungs-/Delithiierungskapazität (mAhg$^{-1}$) die spezifische Kapazität bei C/10 bei 25 °C für den ersten Lithiierungszyklus für die Anode oder den ersten Delithiierungszyklus für die Kathode ist, gemessen an einer äquivalenten Halbzelle mit einer Li-Metall-Gegenelektrode.

**13.** Verfahren nach Anspruch 12, wobei die elektrochemische Zelle eine Metallionenbatterie wie eine Lithiumionenbatterie oder eine Natriumionenbatterie ist oder wobei die elektrochemische Zelle eine Lithiumionenbatterie ist.

**14.** Elektrode, erhalten durch das Verfahren nach einem der Ansprüche 1-11.

**15.** Elektrochemische Zelle, erhalten durch das Verfahren nach Anspruch 12 oder Anspruch 13.

**Revendications**

1. Procédé de production d'une électrode, le procédé comprenant :

   la fourniture d'un matériau $H\text{-}Nb_2O_5$ de départ ;
   le broyage à jet et la classification du matériau de départ pour fournir un matériau $H\text{-}Nb_2O_5$ traité ayant un diamètre particulaire $D_{50}$ de 2,2 à 15 $\mu$m et un intervalle de distribution granulométrique $(D_{90}\text{-}D_{10})/D_{50}$ de < 1,90, lorsque $D_{10}$, $D_{50}$, et $D_{90}$ sont déterminés par diffraction laser ;
   la formation d'une électrode comprenant le matériau $H\text{-}Nb_2O_5$ traité en tant que matériau d'électrode actif.

2. Procédé de la revendication 1, dans lequel le matériau $H\text{-}Nb_2O_5$ traité a un intervalle de distribution granulométrique $(D_{95}\text{-}D_5)/D_{50}$ de < 2,50, de < 2,25, ou de < 2,0, lorsque $D_5$, $D_{50}$, et $D_{95}$ sont déterminés par diffraction laser ; dans lequel le matériau $H\text{-}Nb_2O_5$ traité a un intervalle de distribution granulométrique $(D_{90}\text{-}D_{10})/D_{50}$ de < 1,80, de < 1,60, ou de < 1,50, lorsque $D_{10}$, $D_{50}$, et $D_{90}$ sont déterminés par diffraction laser.

3. Procédé d'une quelconque revendication précédente, dans lequel le matériau $H\text{-}Nb_2O_5$ traité a un diamètre particulaire $D_{50}$ de 2,5 à 12 $\mu$m, de 3,0 à 10 $\mu$m, ou de 4,0 à 8,0 $\mu$m, lorsqu'il est déterminé par diffraction laser ; et/ou

   dans lequel le matériau $H\text{-}Nb_2O_5$ traité a un diamètre particulaire $D_{10}$ de > 0,7 $\mu$m, de 1,0 à 8,0 $\mu$m, ou de 1,5 à 4,0 $\mu$m, lorsqu'il est déterminé par diffraction laser ; et/ou
   dans lequel le matériau $H\text{-}Nb_2O_5$ traité a un diamètre particulaire $D_{90}$ de < 30 $\mu$m, de 4,5 à 20 $\mu$m, ou de 5,5 à 15 $\mu$m, lorsqu'il est déterminé par diffraction laser.

4. Procédé d'une quelconque revendication précédente, dans lequel le matériau $H\text{-}Nb_2O_5$ traité a une surface BET de > 0,7 $m^2$/g, de 1 à 20 $m^2$/g, ou de 0,8 à 2,50 $m^2$/g, lorsqu'elle est déterminée conformément à ISO 9277:2010.

5. Procédé d'une quelconque revendication précédente, dans lequel le matériau $H\text{-}Nb_2O_5$ de départ a un diamètre particulaire $D_{50}$ de > 20 $\mu$m, de 25 à 150 $\mu$m, ou de 30 à 100 $\mu$m, lorsqu'il est déterminé par diffraction laser.

6. Procédé d'une quelconque revendication précédente, dans lequel le matériau $H\text{-}Nb_2O_5$ de départ a une pureté de phase de > 80 % en poids de $H\text{-}Nb_2O_5$, de > 90 % en poids de $H\text{-}Nb_2O_5$, de > 95 % en poids de $H\text{-}Nb_2O_5$, ou de 100 % en poids de $H\text{-}Nb_2O_5$, lorsqu'elle est déterminée par diffraction aux rayons X.

7. Procédé d'une quelconque revendication précédente, dans lequel le rapport d'intensité du pic dans le diagramme XRD du matériau $H\text{-}Nb_2O_5$ traité à 23,7° $2\theta$ relativement au pic à 24,4° $2\theta$ est dans la plage de 0,7 à 1,3 ou 0,8 à 1,2.

8. Procédé d'une quelconque revendication précédente, dans lequel le broyage à jet comprend le broyage à jet à lit fluidisé ou le broyage à jet en spirale, ou comprend le broyage à jet à lit fluidisé, ou est constitué du broyage à jet à lit fluidisé ; et/ou dans lequel la classification est accomplie par un classificateur centrifuge à air à tourbillon forcé.

9. Procédé d'une quelconque revendication précédente, dans lequel la formation de l'électrode comprend la formation d'une boue du matériau $H\text{-}Nb_2O_5$ traité dans un solvant, le dépôt de la boue sur un collecteur de courant, et l'élimination du solvant ; facultativement dans lequel la boue comprend au moins un composant supplémentaire sélectionné parmi un liant, un additif conducteur, un matériau d'électrode actif différent, et des mélanges de ceux-ci.

10. Procédé d'une quelconque revendication précédente, dans lequel le matériau $H\text{-}Nb_2O_5$ traité est revêtu de carbone avant la formation de l'électrode.

11. Procédé d'une quelconque revendication précédente, dans lequel le matériau $H\text{-}Nb_2O_5$ traité forme au moins 10 % en poids, 50 % en poids, ou 75 % en poids du matériau d'électrode actif total dans l'électrode ; et/ou dans lequel le matériau $H\text{-}Nb_2O_5$ traité est le seul matériau d'électrode actif dans l'électrode.

12. Procédé d'une quelconque revendication précédente, comprenant en outre la formation d'une cellule électrochimique comprenant l'électrode ; facultativement dans lequel la cellule électrochimique comprend l'électrode en tant qu'anode, une cathode, et un électrolyte disposé entre l'anode et la cathode ; facultativement dans lequel :

    (i) la cellule électrochimique est formulée pour avoir un rapport N/P > 1 ; ou
    (ii) la cellule électrochimique est formulée pour avoir un rapport N/P $\leq$ 1 ;

dans lequel N/P est défini par :

$$\frac{\text{chargement surfacique (mgcm}^{-2})(\text{anode}) \times \text{fraction active(\% en poids)(anode)} \times \text{première capacité de lithiation (mAhg}^{-1})(\text{anode})}{\text{chargement surfacique (mgcm}^{-2})(\text{cathode}) \times \text{fraction active(\% en poids)(cathode)} \times \text{première capacité de délithiation (mAhg}^{-1})(\text{cathode})}$$

dans lequel :

chargement surfacique (mgcm$^{-2}$) est le chargement à sec de la composition d'électrode, ne prenant pas en compte le collecteur de courant ;

fraction active (% en poids) est le pourcentage de la composition d'électrode à sec qui est un matériau actif ;

première capacité de lithiation/délithiation (mAhg$^{-1}$) est la capacité spécifique à C/10 à 25 °C pour le premier cycle de lithiation pour l'anode ou le premier cycle de délithiation pour la cathode, mesurée sur une demi-cellule équivalente avec une contre-électrode en métal Li.

13. Procédé de la revendication 12, dans lequel la cellule électrochimique est une batterie métal-ion telle qu'une batterie lithium-ion ou une batterie sodium-ion, ou dans lequel la cellule électrochimique est une batterie lithium-ion.

14. Électrode obtenue par le procédé de quelconques des revendications 1 à 11.

15. Cellule électrochimique obtenue par le procédé de la revendication 12 ou de la revendication 13.

Figure 1

Figure 2

Figure 3

Example 1

Example 2

Example 5

Example 6

Figure 4

Example 1

Example 2

Example 6

Figure 5

Figure 6

| Example 7 | Example 8 | Example 9 |

Figure 7

| Example 7 | Example 8 | Example 9 |

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021245411 A

- EP 0402687 B1

**Non-patent literature cited in the description**

- **B. REICHMAN** ; **A. J. BARD**. The Application of Nb2O5 as a Cathode in Nonaqueous Lithium Cells. *J. Electrochem. Soc.*, 1981, vol. 128, 344
- **R. J. CAVA** ; **D. W. MURPHY** ; **S. M. ZAHURAK**. Lithium Insertion in Wadsley-Roth Phases Based on Niobium Oxide. *J. Electrochem. Soc.*, 1983, vol. 130 (12), 2345-2351
- **N. KOSHIBA** ; **K. TAKATA** ; **M. NAKANISHI** ; **Z. TAKEHARA**. Evaluation of crystalline Nb2O5 as an anode of rechargeable lithium cell. *Denki Kagaku*, 1994, vol. 62 (7), 593-601

- **K. J. GRIFFITH** ; **A. C. FORSE** ; **J. M. GRIFFIN** ; **C. P. GREY**. High-Rate Intercalation without Nanostructuring in Metastable Nb2O5 Bronze Phases. *J. Am. Chem. Soc.*, 2016, vol. 138 (28), 8888-8899
- **LI et al.** A Niobium Oxide with Shear Structure and Planar Defects for High-Power Lithium Ion Batteries. *Energy Environ. Sci.*, 2021
- **GRIFFITH et al.** *J. Am. Chem. Soc.*, 2016, vol. 138 (28), 8888-8899